# EUROPÄISCHE PATENTSCHRIFT

(11) **EP 2 598 442 B1**
(45) Veröffentlichungstag und Bekanntmachung des Hinweises auf die Patenterteilung: **06.05.2020**
(21) Anmeldenummer: 11736310.1
(22) Anmeldetag: 04.07.2011
(51) Int. Cl.: C01G 1/02, C01G 23/00, C01G 31/00, C01G 37/00, C01G 45/00, C01G 45/12, C01G 49/00, C01G 51/00, C01G 53/00, C01B 25/30, C01B 25/37, B02C 23/08

(54) **VERFAHREN ZUR VERMINDERUNG VON MAGNETISCHEN UND/ODER OXIDISCHEN VERUNREINIGUNGEN IN LITHIIUM-METALL-SAUERSTOFF-VERBINDUNGEN**
PROCESS FOR REDUCING MAGNETIC AND/OR OXIDIC IMPURITIES IN LITHIUM-METAL-OXYGEN COMPOUNDS
PROCÉDÉ DE RÉDUCTION D'IMPURETÉS MAGNÉTIQUES ET/OU OXYDIQUES DANS DES COMPOSÉS LITHIUM MÉTALLIQUE-OXYGÈNE

(30) Priorität: 26.07.2010 DE 102010032207
(43) Veröffentlichungstag der Anmeldung: 05.06.2013
(73) Patentinhaber: Johnson Matthey PLC, London EC4A 4AB (GB)
(72) Erfinder: HOLZAPFEL, Michael, Dr., 77694 Kehl (DE); VOGLER, Christian, Dr., 85774 Unterföhring (DE)
(74) Vertreter: Gleave, Robert James
(86) Internationale Anmeldenummer: PCT/EP2011/061250
(87) Internationale Veröffentlichungsnummer: WO 2012/013454

(56) Entgegenhaltungen:
- EP-A1- 0 617 474
- EP-A1- 2 322 473
- EP-A1- 2 416 409
- WO-A1-00/15873
- WO-A1-97/40541
- WO-A1-2010/114015
- DE-A1-102008 026 580
- FR-A1- 2 814 460
- US-A- 3 685 964
- US-A- 4 973 458
- US-A1- 2008 285 211

## Beschreibung

Die vorliegende Erfindung betrifft ein Verfahren zur Verminderung von magnetischen und/oder oxidischen Verunreinigungen in Lithium-Metall-Sauerstoff-Verbindungen in Partikelform, um aufgereinigte Lithium-Metall-Sauerstoff-Verbindungen zu erhalten.

Das Grundprinzip wiederaufladbarer Lithium-Ionen-Batterien (wiederaufladbarer Akkumulatoren) ist ein Lade- und Entladevorgang, elektrochemisch aktiver Ionen, wodurch eine Quellspannung erzeugt und der Ladungsausgleich durch die Wanderung von Lithium-Ionen bewerkstelligt wird. Beim Ladevorgang wandern Lithium-Ionen von der Kathode zur Anode. Beim Entladevorgang wird dieser Vorgang umgekehrt und die Lithium-Ionen wandern zurück zur Kathode.

Als Anodenmaterial wurde in wiederaufladbaren Lithium-Ionen-Batterien häufig Graphit eingesetzt. Dies führte jedoch zur Ausbildung einer passivierenden Zwischenschicht (SEI = Solid Electrolyte Interface) an der Elektrolyt-Grenzfläche, diese SEI ist thermisch instabil. Aufgrund dieser passivierenden Zwischenschicht steigt auch der Innenwiderstand der Lithium-Ionen-Batterie, wodurch verlängerte Ladezeiten auftreten, verbunden mit einer verringerten Leistungsdichte. Um diese Nachteile zu umgehen, wurde daher versucht, andere Anodenmaterialien bereitzustellen.

Üblicherweise werden in Lithium-Ionen-Batterien flüssige, zumeist brennbare Elektrolytlösungen eingesetzt. Diese flüssigen Elektrolytlösungen stellen ein Sicherheitsrisiko aufgrund ihrer Brennbarkeit dar und führen zu vergrößertem Volumen der Lithium-Ionen-Batterien. Um diese Nachteile zu umgehen wurde versucht diese Elektrolytlösungen durch Feststoffe zu ersetzen, durch die das Sicherheitsrisiko minimiert wird, und eine Reduzierung des Volumens der Lithium-Ionen-Batterien erfolgt. Die Weiterentwicklung führte zur Verwendung von festen Lithium-Verbindungen als Elektrolyte, die zu einer Volumenreduktion der Lithium-Ionen-Batterie führen und auch hohe Eigensicherheit gewährleisten. Ein weiterer Vorteil ist, dass die festen Lithium-Verbindungen nicht mehr austrocknen können, wodurch sich die Langlebigkeit der Lithium-Ionen-Batterien erhöht.

Als feste Elektrolyte werden auch keramische Separatoren eingesetzt, wie beispielsweise das von der Firma Evonik Degussa mittlerweile kommerziell erhältliche Separion® (DE 196 53 484 A1), das keramische Füllstoffe wie kleinpartikuläres Al₂0₃, oder Si0₂ enthält.

Aono et al. untersuchte verschiedene Materialien hinsichtlich ihrer Lithium-Ionen-Leitfähigkeit. Es zeigte sich, dass dotierte und nicht dotierte Lithiumtitanphosphate als feste Elektrolyte aufgrund ihrer sehr guten Lithium-Ionen-Leitfähigkeit eingesetzt werden können (J. Electrochem. Soc., Vol. 137, Nr. 4, 1990, S. 1023-1027, J. Electrochem. Soc., Vol. 136, Nr. 2, 1989, S. 590-591).

Dabei wurden insbesondere mit Aluminium, Scandium, Yttrium und Lanthan dotierte Systeme untersucht. Es wurde gefunden, dass die Dotierung mit Aluminium die besten Ergebnisse liefert. Abhängig vom Dotierungsgrad wurde die höchste Lithium-Ionen-Leitfähigkeit nachgewiesen, da Aluminium aufgrund seines Kationenradius, der kleiner ist als der von Ti⁴⁺, im Kristall die Plätze des Titans gut einnehmen kann. Lithiumaluminiumtitanphosphate zeigen zudem eine geringe elektrische Leitfähigkeit, was sie neben ihrer großen Härte (Mohshärte 8) als sehr geeignete feste Elektrolyte in Sekundär-Lithium-Ionen-Batterien auszeichnet.

Lithium-Metall-Sauerstoff-Verbindungen werden nicht nur als Elektrolyte, sondern sowohl als Anode als auch als Kathode in Lithium-Ionen-Batterien eingesetzt. Da Lithium-Ionen-Batterien häufig in Elektrowerkzeugen, Computern, Mobiltelefonen usw. vielfältig eingesetzt werden, und diese immer mehr Leistung fordern, ist das primäre Ziel die Leistungsfähigkeit der Lithium-Ionen-Batterien zu erhöhen.

Lithiumeisenphosphat, verwendet als Kathodenmaterial, in Kombination mit Lithiumtitanaten als Anode, führt zu einer höheren Strombelastbarkeit, im Vergleich zur Verwendung von Graphit mit Lithiumtitanat als Anodenmaterial, vor allem beim Ladevorgang und so zu einer Steigerung der Leistungsfähigkeit der Lithium-Ionen-Batterie. Neben diesen Vorteilen weisen diese Lithium-Ionen-Batterien zudem hohe thermische und strukturelle Stabilität auf, und haben eine längere Lebensdauer. Ein weiterer Vorteil liegt in ihrer geringen Toxizität und der damit verbundenen guten Umweltverträglichkeit.

Als Anodenmaterial wird heute statt Graphit bevorzugt Lithiumtitanat eingesetzt (US 5,545,468A), alternativ nanokristallines, amorphes Silizium oder Zinndioxid, Lithium-Metall-Verbindungen, Magnesium-Molybdate oder Magnesium-Vanadate. Weitere Anodenmaterialien finden sich in Bruce, P. G.; Scrosati, B.; Tarascon, J.-M. Angew. Chem. Int. Ed. 2008, 47, 2930-2946.

Lithiumtitanate kristallisieren kubisch in der Spinell-Struktur, in der Raumgruppe Fd3m. Aufgrund der Struktur und des Potentials von ca. 1,5 V gegen Li/Li⁺ wird die Ausbildung einer passivierenden Zwischenschicht (SEI) auf der Oberfläche der Lithiumtitanat-Spinell-Elektrode verhindert, wodurch sich die Alterung der Elektrode verzögert und die Anzahl der Ladevorgänge erhöht wird. Die verbesserte mechanische und thermische Stabilität führt zudem zu höherer Eigensicherheit der Lithium-Ionen-Batterien, wodurch sich die Tendenz zu Kurzschlüssen, oder Überhitzung stark verringert.

Die Herstellung von Lithiumtitanaten erfolgt üblicherweise mittels Festkörperreaktion während 3 h bis 24 h, ausgehend von Titandioxid und Lithiumcarbonat oder Lithiumhydroxid, bei 700 °C bis 1000 °C an Luft (US 5,545,468A). In Abhängigkeit von der Synthesetemperatur kann jedoch noch Titandioxid in verschiedenen Modifikationen (Rutil, Anatas) im Produkt mit enthalten sein. Neben Festkörperreaktion ist auch die nasschemische Synthese von Lithiumtitanaten möglich.

Neben ihrer Verwendung als Anodenmaterial finden Lithium-Metall-Sauerstoff-Verbindungen auch als Kathode Anwendung. Arbeiten von Goodenough et al. (US 5,910,382) zeigten, dass sich dotierte und nicht dotierte Lithium-Übergangsmetall-Phosphate besonders für den Einsatz als Kathodenmaterial eignen.

Eingesetzt werden weiter Lithium-Übergangsmetall-Oxide, wie beispielsweise Lithiumcobaltoxid, Lithiumnickeloxid, Lithiummanganoxid, sowie dotierte Lithium-Übergangsmetall-Oxide und Lithium-Übergangsmetall-Phosphate wie Lithiummangannickeloxid, Lithiumnickelcobaltoxid oder Lithiumeisenphosphat.

Lithium-Übergangsmetall-Oxide die eine Schichtstruktur aufweisen eignen sich besonders für den Einsatz als Kathodenmaterial, da diese eine gute Wanderungsfähigkeit von Lithium-Ionen zeigen. Bevorzugt weist das Übergangsmetall-Atom eine hohe Affinität zu oktaedrischen Gitterplätzen auf, wodurch sich die Tendenz zu Jahn-Teller-Verzerrung und zu Symmetriereduktion verringert.

Dargestellt werden Lithium-Metall-Sauerstoff-Verbindungen mittels Festkörpersynthese, Sol-Gel-Verfahren, oder Hydrothermalsynthese, die die besten Ergebnisse liefert. Ausgehend von wässrigen Lithiumhydroxidlösungen und Metallsalzen können z.B. in Anwesenheit einer Base durch Ausfällen eines gelartigen Niederschlags reine Lithium-MetallOxide erhalten werden, die anschliessend noch bei hohen Temperaturen getempert werden müssen.

Die Darstellung der Lithium-Metall-Sauerstoff-Verbindungen für den Einsatz in Lithium-Ionen-Batterien setzt voraus, dass ihr Reinheitsgrad sehr hoch ist. Hierfür werden bevorzugt nasschemische Synthesewege gewählt, da so der Grad der Verunreinigung durch nicht-umgesetzte Edukte gering gehalten werden kann. Aufgrund der langen Trocknungs-, Temper- und Kalzinierungszeiten werden jedoch große agglomerierte Partikel erhalten (Partikelgrößen von 100 µm bis 200 µm), die durch Mahlvorgänge zerkleinert werden müssen, da nur kleinpartikuläres Material in Lithium-Ionen-Batterien zu guter spezifischer Kapazität der Lithium-Ionen-Batterie führt.

Lithium-Metall-Sauerstoff-Verbindungen zeichnen sich meist durch eine hohe Härte aus, daher tritt bei Mahlvorgängen, zur Zerkleinerung der agglomerierten Partikel und weiteren Verfahrensschritten ein starker Abrieb an den Geräten und Vorrichtungen auf, der zu starken magnetischen und/oder oxidischen Verunreinigungen in den Lithium-Metall-Sauerstoff-Verbindungen führt.

Diese Verunreinigungen führen zur Entladung der Lithium-Ionen-Batterie, sowie zu einer Herabsetzung der spezifischen Kapazität. Sie stellen weiter ein starkes Sicherheitsrisiko dar, da aufgrund der magnetischen und/oder oxidischen Verunreinigungen Kurzschlüsse auftreten können, wodurch die Lithium-Ionen-Batterie zerstört wird, und unter Umständen sogar explodieren kann.

Neben Verunreinigungen aufgrund von magnetischem Abrieb an Geräten, können auch Reste von nicht-umgesetzten Edukten noch im Produkt enthalten sein, die sich ebenfalls störend auf den Betrieb der Lithium-Ionen-Batterie auswirken.

Deshalb ist die Entfernung von Verunreinigungen aus Lithium-Metall-Sauerstoff-Verbindungen von großer Bedeutung, sowohl zur Erhöhung der Eigensicherheit der Lithium-Ionen-Batterie als auch um die spezifische Kapazität zu steigern.

Aus dem Stand der Technik sind verschiedene Verfahren zur Entfernung von Verunreinigungen bekannt.

Die US 3,685,964 offenbart ein Verfahren bei dem unerwünschte Eisen-Verunreinigungen aus wässrigen Alkali-Phosphat-Lösungen durch Zugabe von Sulfiden ausgefällt und abgetrennt werden. Dieses Verfahren kann nicht für Lithium-Metall-Sauerstoff-Verbindungen eingesetzt werden, da eine Agglomeration der Partikel durch das Tempern und das Trocknen auftritt, und die dadurch erforderlichen Mahlschritte dazu führen, dass magnetische und/oder oxidische Verunreinigungen auftreten.

Die US 4,973,458 stellt eine Vorrichtung und ein Verfahren zur Verfügung, mit dem Verunreinigungen mittels Agglomeration der unerwünschten Verunreinigungen und Abtrennung durch keramische Filtersysteme unter Verwendung eines Wirbelbetts aus Gasen entfernt werden können. Dieses Verfahren ist nicht geeignet, um magnetische und/oder oxidische Verunreinigungen aus festen Lithium-Metall-Sauerstoff-Verbindungen abzutrennen, da diese zwar verwirbelt werden können, jedoch die Gefahr ihrer thermisch induzierten Zersetzung herrscht.

Weiter kann die Abtrennung von Verunreinigungen in fester Phase in Abhängigkeit von der Partikelgröße (Partikelgröße Verunreinigung > Partikelgröße Produkt) in einem Sichtvorgang, oder unter Verwendung eines Zyklons durchgeführt werden. Es wird ein aufgereinigtes, kleinporiges Produkt erhalten, während die größeren Partikel der Verunreinigungen in einer Sichterkammer angereichert und nach dem Sichtvorgang verworfen werden.

Sobald jedoch durch einen Mahlvorgang die Partikelgrößen der Verunreinigung den Partikelgröße des Produktes entsprechen, können Verunreinigungen nur unvollständig entfernt werden, was dazu führt, dass weiterhin ein großer Anteil an Verunreinigungen im Produkt verbleibt.

Für gemahlene, kleinpartikuläre Lithium-Metall-Sauerstoff-Verbindungen ist diese Methode somit nicht geeignet, den erforderlichen Reinheitsgrad zu erhalten, da nach der Mahlbehandlung die Partikelgröße der Verunreinigung der Partikelgröße der Lithium-Metall-Sauerstoff-Verbindung entspricht, und diese mittels Sichtvorgang nach der oben beschriebenen Methode nicht abgetrennt werden können, da die Auftrennleistung eines Sichters oder Zyklons versagt.

Auch in Lithiumeisenphosphaten sind häufig Verunreinigungen enthalten, bestehend aus metallischen und/oder oxidischen Partikeln aufgrund von metallischem Abrieb an Vorrichtungen bei Verarbeitungsvorgängen, wie dem Mahlen, hervorgerufen durch die Härte des Materials. Auch diese Verunreinigungen im Kathodenmaterial führen zu hohen Ausfallraten der Lithium-Ionen-Batterien, da Selbstentladungsprozesse begünstigt werden. Deshalb ist die Entfernung von Verunreinigungen aus Lithiumeisenphosphaten von großer Bedeutung.

Die EP 09 013 035.2 beschreibt ein Verfahren, das ausgehend von verunreinigtem Lithiumeisenphosphat zur weitgehenden Entfernung von metallischen und/oder oxidischen Partikeln unter Verwendung einer Fließbett- und Sichterstufe führt. Durch vorzeitiges Abbrechen des Mahlvorgangs und Sichtvorgangs können metallische und/oder oxidische Verunreinigungen vom Lithiumeisenphosphat abgetrennt werden, da diese größtenteils im Sichter zurück bleiben, und zusammen mit einem Rückstand an nicht-umgesetztem Lithiumeisenphosphat abgetrennt und verworfen werden können.

Die US 4 973 458 A offenbart eine Vorrichtung und ein Verfahren zur Entfernung von teilchenförmigen Verunreinigungen und optional von gasförmigen Verunreinigungen aus einem heißen Gasstrom, wobei ein Gefäß bereitgestellt wird, das eine Wirbelbettzone enthält, und die Gase durch die ein Wirbelbett aus körnigem Medium enthaltende Wirbelbettzone vor einem Führen eines Hauptteils des Gases durch eine Vielzahl aus ersten hohlen, keramischen Sperrfilterelementen, die mindestens teilweise in dem Wirbelbett angeordnet sind, und eines geringfügigen Teils hiervon durch eine Vielzahl von zweiten hohlen keramischen Sperrpolierfilterelementen, die aus dem körnigen Wirbelmedium entfernt wurden, geführt werden. Die US 3 685 964 A offenbart ein Verfahren zur Reinigung wässriger Alkaliphosphatlösungen, die aus einer im Nassverfahren hergestellten Phosphorsäure hergestellt wurden und weniger als 10.0000 ppm Eisen enthalten, durch Behandeln derselben mit Alkalisulfiden oder Schwefelwasserstoff bei einem pH-Wert von 6,5 bis 9, um unerwünschte Metallionen, insbesondere Eisen, zu entfernen.

Die WO 00/15873 A1 offenbart ein Verfahren zur Verringerung des Druckabfalls, zum Erhöhen der Kapazität und zum Verbessern des Trennungsgrades in Trockenreinigungsanlagen für Abgas aus Aluminiumreduktionsöfen, das die Stufe eines mindestens teilweisen selektiven Abtrennens von partikulärem, körnigem Fluorid aus recyceltem Aluminiumoxid umfasst.

Die US 2008/0285211 A1 offenbart ein Syntheseverfahren für neue Partikel der Formel Li₄Ti₅O₁₂, Li_{(4-α)}Z_{α}Ti₅O₁₂ oder Li₄Z_{β}Ti_{(5-β)}O₁₂, wobei β größer als 0 und kleiner oder gleich 0,5 ist, α eine Zahl darstellt, die größer als 0 und kleiner oder gleich 0,33 ist, Z für eine Quelle mindestens eines Metalls steht, das vorzugsweise aus Mg, Nb, Al, Zr, Ni und Co ausgewählt ist.

Die FR 2 814 460 A offenbart ein Verfahren, bei dem ein rohes pulverförmiges Material, das Lithium und Titan enthält, in einer Flüssigkeit dispergiert wird, die eine wässrige Bindemittellösung von Alginsäure enthält. Die flüssige Dispersion wird in Form feuchter Gelkörnchen durch eine Düse in ein mehrwertige Metalle enthaltendes Flüssigkeitsbad getropft. Die Bindemittellösung wird geliert. Die Körnchen werden getrocknet und einer Kalzinierung unterzogen, um das mehrwertige Metall zu entfernen. Die Körnchen werden anschließend gesintert.

Die WO 2010/114015 A1, die in Stand der Technik gemäß Art. 54(3) EPÜ darstellt, offenbart ein aktives Material für eine positive Elektrode für Lithiumbatterien, das ein Lithiumübergangsmetalloxid vom Spinelltyp (Fd3-m) der allgemeinen Formel Li₁₊ₓM₂₋ₓO_{4-δ} (wobei M für ein Übergangsmetall einschließlich Mn, Al and Mg steht, x für 0,01 bis 0,08 steht und 0≤δ) und eine Borverbindung enthält.

Im Stand der Technik findet sich kein Verfahren zur Entfernung von magnetischen und/oder oxidischen Verunreinigungen aus kleinpartikulären Lithium-Metall-Sauerstoff-Verbindungen.

Aufgabe der vorliegenden Erfindung war es daher, ein Verfahren zur Entfernung von magnetischen und/oder oxidischen Verunreinigungen aus Lithium-Metall-Sauerstoff-Verbindungen in Partikelform bereitzustellen, um aufgereinigte, kleinpartikuläre Lithium-Metall-Sauerstoff-Verbindungen zu erhalten.

Diese Aufgabe wird erfindungsgemäß durch ein Verfahren gelöst, das die folgenden Schritte umfasst:
a) des Bereitstellens einer Lithium-Metall-Sauerstoff-Verbindung in einer Menge m, enthaltend Verunreinigungen,
b) des Einbringens eines Anteils von 5 bis 15 % der Menge m der Lithium-Metall-Sauerstoff-Verbindung,
c) des Mahlens und Sichtens der Lithium-Metall-Sauerstoff-Verbindung unter kontinuierlichem Entnehmen und Erhalten der aufgereinigten Lithium-Metall-Sauerstoff-Verbindung, bis zu einem Rückstand von 3 % bis 0,01 % der Menge m,
d) des Entnehmens der aufgereinigten Lithium-Metall-Sauerstoff-Verbindung,
e) des Verwerfens des Rückstands,
f) des Wiederholens der Schritte b) bis e) bis die gesamte Menge m umgesetzt wurde.

Es wurde überraschenderweise gefunden, dass magnetische und/oder oxidische Verunreinigungen in Lithium-Metall-Sauerstoff-Verbindungen durch die Schritte des Mahlens und Sichtens unter kontinuierlichem Entnehmen und Erhalten der aufgereinigten Lithium-Metall-Sauerstoff-Verbindung abgetrennt werden können, und so aufgereinigte, kleinpartikuläre Lithium-Metall-Sauerstoff-Verbindungen erhalten werden.

Unter magnetischen und/oder oxidischen Verunreinigungen werden im Rahmen der vorliegenden Erfindung auch metallische Verunreinigungen verstanden. Dabei kann es sich um verschiedene metallische Verunreinigungen handeln, die beispielsweise durch metallischen Abrieb (beispielsweise von verschiedenen Stählen) der eingesetzten Geräte (Reaktionsgefäße, Wägevorrichtungen, Mahl-, Sichtvorrichtungen, etc.) in die Lithium-Metall-Sauerstoff-Verbindungen eingetragen werden. Desweiteren kann es sich bei den Verunreinigungen auch um verbleibende Edukte aus der Synthesereaktion handeln. Abhängig davon welche Syntheseroute gewählt wird, können auch metallische, magnetische und oxidische Reste der Edukte enthalten sein, wie Fe, Fe₃O₄, Li₂0, TiO₂, etc um nur einige zu nennen. Weiter können auch Reste von Metallen, die zur Dotierung der erfindungsgemäßen Lithium-Metall-Sauerstoff-Verbindungen eingesetzt werden, mit in den Lithium-Metall-Sauerstoff-Verbindungen enthalten sein.

Der Mahlvorgang und Sichtvorgang wird vorzeitig abgebrochen, bevor die eingesetzte Lithium-Metall-Sauerstoff-Verbindung vollständig umgesetzt ist, und bevor die Menge der nicht-umgesetzten Lithium-Metall-Sauerstoff-Verbindung etwa 1 % der eingesetzten Menge m unterschreitet. Nach vorzeitigem Abbruch des Mahlvorgangs und Sichtvorgangs wird ein nicht-umgesetzter Rückstand von etwa 1 % der eingesetzten Menge m, bestehend aus Verunreinigungen, verworfen.

Überraschenderweise sind die durch das erfindungsgemäße Verfahren erhaltenen aufgereinigten Lithium-Metall-Sauerstoff-Verbindungen so rein und kleinpartikulär, dass sie ohne weitere Verfahrensschritte als Elektroden für Lithium-Ionen-Batterien verwendet werden können.

Obwohl die Partikel der Lithium-Metall-Sauerstoff-Verbindungen und die Verunreinigungen gleich groß sind, können sie trotzdem durch das erfindungsgemäße Verfahren aufgetrennt werden. Ohne an eine bestimmte Theorie gebunden zu sein, können diese aufgrund ihrer unterschiedlichen Dichte aufgetrennt werden. Die magnetischen und/oder oxidischen Verunreinigungen, weisen im Vergleich zu den Lithium-Metall-Sauerstoff-Verbindungen eine höhere Masse auf, wodurch sie länger in der Mahl- und Sichterkammer verbleiben, und können so durch das vorzeitige Abbrechen des Mahlvorgangs abgetrennt werden.

Somit wird durch das erfindungsgemäße Verfahren eine aufgereinigte Lithium-Metall-Sauerstoff-Verbindung in Partikelform erhalten, die einen sehr geringen Anteil an magnetischen und/oder oxidischen Verunreinigungen aufweist, und gleichzeitig kleinpartikulär vorliegt, was eine Erhöhung der spezifischen Kapazität unter gleichzeitiger Reduktion des Volumens der Lithium-Ionen-Batterie mit sich bringt, und sich daher besonders gut für den Einsatz als Anoden-, Kathoden- oder Elektrolytmaterial in Lithium-Ionen-Batterien eignet. Durch den hohen Reinheitsgrad der Lithium-Metall-Sauerstoff-Verbindung und die geringe Partikelgröße verlängert sich auch die Lebensdauer der Lithium-Ionen-Batterien um ein Vielfaches.

Unter den erfindungsgemäßen Lithium-Metall-Sauerstoff-Verbindungen werden insbesondere Lithiumtitanate verstanden, die erfindungsgemäß alle Lithiumtitanspinelle vom Typ Li₁₊ₓTi₂₋ₓO₄ mit (0 ≤ x ≤ 1/3) der Raumgruppe Fd3m und generell auch sämtliche dotierten und nicht dotierten gemischten Lithiumtitanate der generischen Formel Li₁₊ₓTi_{y}O (0 < x, y < 1) umfassen.

Unter Lithium-Metall-Sauerstoff-Verbindungen werden vorliegend Verbindungen verstanden, die neben Lithium und Sauerstoff noch mindestens ein weiteres Haupt- oder Nebengruppenmetall enthalten. Unter diesen Begriff fallen also auch Verbindungen wie Phosphate mit der generischen Formel LiMPO₄, Vanadate mit der generischen Formel LiMVO₄, entsprechende Plumbate, Molybdate und Niobate. Daneben werden auch "klassische Oxide" unter diesem Begriff verstanden, wie gemischte Lithium-Übergangsmetall-Oxide der generischen Formel LiₓM_{y}O (0≤x,y≤1), wobei M bevorzugt ein sogenanntes "frühes Übergangsmetall" wie Ti, Zr oder Sc Ist, jedoch wenn auch nicht gar so bevorzugt auch ein "spätes Übergangsmetall" wie Co, Ni, Mn, Fe, Cr sein kann.

Weiter werden unter Lithium-Metall-Sauerstoff-Verbindungen erfindungsgemäß auch dotierte und nicht-dotierte Lithium-Metall-Sauerstoff-Verbindungen wie Lithiumvanadiumoxid, Lithiumchromoxid, Lithiumeisenoxid, Lithiummanganoxid, Lithiumcobaltoxid, Lithiumnickeloxid, sowie gemischte Lithium-Übergangsmetalloxide, wie Lithiumcobaltnickeloxid, Lithiummangannickeloxid, Lithiumchrommanganoxid, Lithiumtitanaluminiumphosphat, Lithiumtitanzirkonphosphat verstanden.

Diese Verbindungen sind sehr hart und weisen üblicherweise eine Mohshärte von 6 bis 8 auf. Die Härte des Materials führt zu Abrieb an den verwendeten Geräten der einzelnen Verfahrensschritte, und damit zu Verunreinigungen.

Unter den Begriffen dotiert und nicht dotiert werden Lithium-Metall-Sauerstoff-Verbindungen verstanden, die eine Dotierung mit B, Al, Na, Mg, Ca, Sr, P, Si, Ti, V, Cr, Mn, Fe, Co, Ni, Cu, Zn, Sn, Ga, In, Y, Zr, Nb, Mo, Ru, oder W, oder Mischungen davon aufweisen. Durch die Dotierung kann die spezifische Kapazität der Lithium-Ionen-Batterien noch weiter erhöht werden.

Insbesondere können im erfindungsgemäßen Verfahren dotierte Lithium-Metall-Sauerstoff-Verbindungen eingesetzt werden, wobei die Lithium-Metall-Sauerstoff-Verbindung eine Summenformel ausgewählt aus LiₓM0₂, LiₓM₂O₄, LiₓM₅O₁₂, Li₁₊ₓM₂₋ₓO₄, LiₓM_{y}O₄, LiₓM₂O₄, LiₓM₂O₃, LiₓM₃O₄, Li₁₊ₓM₂O₄, Li₂MO₃, Li₁₋ₓM'_{y}M"_{2-y}O₄, LiₓM₂O₃, LiₓM₃O₄, LiMO₂, LiM'_{0.5}M"_{0.5}O₂, Li₁₋ₓM'_{1.5}M"₀.₅O₄, Li₁₋ₓM'_{y}M"_{1-y}O₂, oder Li₁₊ₓM'₂₋ₓM"ₓ(PO₄)₃, LiM'_{0.79}M"_{0.20}M'''_{0.01}O₂ aufweist.

Die dotierten Lithium-Metall-Sauerstoff-Verbindungen können gemäß den vorstehend genannten Summenformeln mindestens ein Metall M' enthalten, ausgewählt aus der Gruppe B, Al, Na, Mg, Ca, Sr, P, Si, Ti, V, Cr, Mn, Fe, Co, Ni, Cu, Zn, Sn, Ga, In, Y, Zr, Nb, Mo, Ru, oder W.

Weiter können die vorstehend genannten Lithium-Metall-Sauerstoff-Verbindungen mindestens ein Metall M" enthalten, ausgewählt aus der Gruppe B, Al, Na, Mg, Ca, Sr, P, Si, Ti, V, Cr, Mn, Fe, Co, Ni, Cu, Zn, Sn, Ga, In, Y, Zr, Nb, Mo, Ru, oder W.

Weiter können die vorstehend genannten Lithium-Metall-Sauerstoff-Verbindungen mindestens ein Metall M''' enthalten, ausgewählt aus der Gruppe B, Al, Na, Mg, Ca, Sr, P, Si, Ti, V, Cr, Mn, Fe, Co, Ni, Cu, Zn, Sn, Ga, In, Y, Zr, Nb, Mo, Ru, oder W.

Beispiele derartiger erfindungsgemäßer dotierter Lithium-Metall-Sauerstoff-Verbindungen, mit dem Dotierungsmetallkation von Ti, V, Cr, Mn, Fe, Co, Ni, Cu, Zn, Sn, Al, Zr, Mg, Ca sind Lithium-Titan-Oxid-Verbindungen wie LiₓTi_{y}O (0 < x), (y < 1); LiₓTiO₂ mit (0 < x ≤ 1), LiₓTi₂O₄ mit (0 < x ≤ 2), LiₓTi₅O₁₄ mit (0 < x ≤ 4), Li₁₊ₓTi₂₋ₓO₄ mit (0 ≤ x ≤ 1/3), LiₓTi_{y}O₄, mit (0,8 ≤ x ≤ 1,4) und (1,6 ≤ y ≤ 2,2);
Lithium-Vanadium-Oxid-Verbindungen wie LiₓV₂O₄ mit (0 < x ≤ 2,5) , LiₓV₂O₃ (0 < x ≤ 3,5);
Lithium-Chrom-Oxid-Verbindungen wie LiₓCr₂O₃ mit (0 < x ≤ 3), LiₓCr₃O₄ mit (0 < x ≤ 3,8);
Lithium-Mangan-Oxid-Verbindungen wie LiₓMnO₂ mit (0 < x ≤ 2), LiₓMn₂O₄ mit (0 < x ≤ 2), Li₁₊ₓMn₂O₄ mit (0,5 < x ≤ 1), Li₂MnO₃;
Lithium-Eisen-Oxid-Verbindungen wie LiFeO₂, LiₓFe₂O₃ mit (0 < x ≤ 2), LiₓFe₃O₄ mit (0 < x ≤ 2);
Lithium-Cobalt-Oxid-Verbindungen wie LiCoO₂;
Lithium-Nickel-Oxid-Verbindungen wie LiNiO₂;
oder Lithium-Metall-Oxid-Verbindungen enthaltend Mischungen von Mangan und Nickel: LiMn_{0.5}Ni_{0.5}O₂, Li₁₋ₓNi_{0.5}Mn_{1.5}O₄ (0 < x ≤ 0,5);
Chrom und Mangan: Li₁₋ₓCr_{y}Mn_{2-y}O₄ (0 < x ≤ 1) und (0 < y ≤ 2); Titan und Aluminium: Li₁₊ₓTi₂₋ₓAlₓ(PO₄)₃ mit (0 < x ≤ 1);
Titan und Zirkonium: LiTi₂₋ₓZrₓ(PO₄)₃ mit (0 < x ≤ 1);
Cobalt und Nickel: Li₁₋ₓCO_{y}Ni_{1-y}O₂ mit (0 < x ≤ 0,6) und (0,2 < y ≤ 1);
Nickel und Cobalt, dotiert mit Calcium und/oder Magnesium: LiNi_{0.79}Co_{0.20}(Ca)_{0.01}O₂; LiNi_{0.79}Co_{0.20}(Mg)_{0.01}O₂.

In einer besonderen Ausführungsform der vorliegenden Erfindung wird die Zufuhr der Lithium-Metall-Sauerstoff-Verbindung in die Mahlkammer nach Zugabe von 3 bis 20 % der Menge m unterbrochen, bevorzugt nach Zugabe von 5 bis 15 % der Menge m, besonders bevorzugt nach Zugabe von 10 % der Menge m.

Im Sinne des erfindungsgemäßen Verfahrens wird das Verfahren gemäß der Schritte b) bis e) solange wiederholt, bis die gesamte Menge m eingesetzt und aufgereinigt wurde.

Gemäß einer bevorzugten Ausführungsform des vorliegenden erfindungsgemäßen Verfahrens, wird die aufgereinigte Lithium-Metall-Sauerstoff-Verbindung während des Mahlens und Sichtens kontinuierlich entnommen und erhalten.

Dabei kann das Entnehmen und Erhalten der aufgereinigten Lithium-Metall-Sauerstoff-Verbindung während des Mahlens und Sichtens auch diskontinuierlich erfolgen, unter chargenweiser Entnahme der aufgereinigten Lithium-Metall-Sauerstoff-Verbindung.

Bevorzugt wird die Lithium-Metall-Sauerstoff-Verbindung solange einem Mahlvorgang und Sichtvorgang unter Entnahme der aufgereinigten Lithium-Metall-Sauerstoff-Verbindung unterworfen, bis der Rückstand 3 % bis 0,01 % der Menge m beträgt, bevorzugt 2 % bis 0,5 % der Menge m, bevorzugt 1 % der Menge m. Der Anteil des Rückstands sollte möglichst gering gehalten werden, da dieser neben magnetischen und/oder oxidischen Verunreinigungen auch etwas an Lithium-Metall-Sauerstoff-Verbindung enthält, das mit den Verunreinigungen verworfen wird und so zu Verlusten führt, jedoch nicht zu gering gewählt werden, da durch zu langes Mahlen und Sichten des Materials der Anteil an umgesetzten Verunreinigungen zunimmt.

Vorzugsweise wird die Lithium-Metall-Sauerstoff-Verbindung solange einem Mahlvorgang und Sichtvorgang unter Entnahme der aufgereinigten Lithium-Metall-Sauerstoff-Verbindung unterworfen, bis der Rückstand 3 % bis 0,01 % der Menge m beträgt, bevorzugt 2 % bis 0,5 % der Menge m, bevorzugt 1 % der Menge m, enthaltend Verunreinigungen, damit im Rückstand die magnetischen und/oder oxidischen Verunreinigungen aufkonzentriert enthalten sind.

Erfindungsgemäß wird der Mahlvorgang und Sichtvorgang abgebrochen, bevor der Rückstand 3 % bis 0,01 % der Menge m unterschreitet, bevor 2 % bis 0,5 % der Menge m unterschritten werden, bevor 1 % der Menge m unterschritten werden. Die Einhaltung der angegebenen Grenzen führt zur Abtrennung der magnetischen und/oder oxidischen Verunreinigungen aus Lithium-Metall-Sauerstoff-Verbindungen, wodurch ein kleinpartikuläres aufgereinigtes Material erhalten wird, das direkt als Elektrodenmaterial eingesetzt werden kann. Der Reinheitsgrad beträgt dabei weniger als 1 ppm an Verunreinigungen, bei einer Partikelgrößenverteilung von 0,9 µm bis 7,5 µm. Durch das erfindungsgemäße Reinigungsverfahren wird somit eine weitere Nachbehandlung unnötig, wodurch Kosten und Zeit gespart werden können.

Im Rahmen der vorliegenden Erfindung wird der Rückstand von 3 % bis 0,01 % der Menge m, bevorzugt 2 % bis 0,5 % der Menge m, bevorzugt 1 % der Menge m, nach Abbrechen des Mahlvorgangs und Sichtvorgangs entnommen und verworfen, da dieser die magnetischen und/oder oxidischen Verunreinigungen aufkonzentriert enthält.

Die Partikel der Lithium-Metall-Sauerstoff-Verbindung können zumindest bereichsweise eine kohlenstoffhaltige Beschichtung aufweisen. Die Oberfläche der Partikel oder zumindest eines Großteils der Partikel ist in weiteren Ausführungsformen der Erfindung typischerweise vollständig mit einer kontinuierlichen Beschichtung aus mittels Pyrolyse eines kohlenstoffhaltigen Materials erhaltenen Kohlenstoffs (siehe z.B. EP 1049182 B1), sogenanntem "Pyrolysekohlenstoff", beschichtet.

Es können weiter sowohl elementarer Kohlenstoff als auch Pyrolysekohlenstoff zur Beschichtung der typischerweise noch nicht aufgereinigten Lithium-Metall-Sauerstoff-Verbindungen verwendet werden.

Der Begriff "elementarer Kohlenstoff" bedeutet vorliegend, dass Partikel aus reinem Kohlenstoff, die sowohl amorph wie auch kristallin sein können, jedoch diskrete Partikel (in Form von Kugeln, wie z.B. Kugelgraphit, Flocken, Körner etc) bilden, verwendet werden können. Beispiele für amorphen Kohlenstoff sind z.B. Ketjenblack, Acetylenschwarz, Ruß etc. Jedoch wird im Rahmen der vorliegenden Erfindung ganz besonders bevorzugt ein kristallines elementares Kohlenstoffallotrop verwendet. Beispiele hierfür sind Graphit, Kohlenstoffnanoröhrchen (sog. Kohlenstoff Nano-Tubes) sowie die Verbindungsklasse der Fullerene und Mischungen davon. Ebenso bevorzugt wie die kristallinen Allotrope ist auch sogenannter VGCF Kohlenstoff (vapour grown carbon fibers).

Der Begriff "Pyrolysekohlenstoff" bezeichnet eine durchgehende, kontinuierliche Schicht aus nicht kristallinem Kohlenstoff, die keine diskreten Partikel aus Kohlenstoff aufweist. Der Pyrolysekohlenstoff wird durch Erhitzen, d.h. Pyrolyse bei Temperaturen von unter 1500°C, bevorzugt unter 1200°C und weiter bevorzugt von unter 1000°C und am meisten bevorzugt von unter 800°C von Vorläuferverbindungen gewonnen. Bei höheren Temperaturen von insbesondere >1000°C tritt oftmals eine Agglomerierung der Partikel an den gemischten Lithium-Metalloxiden durch sogenannte "Versinterung" auf, was typischerweise zu einer schlechten Strombelastbarkeit des erfindungsgemäßen Verbundmaterials führt. Wichtig ist vorliegend nur, dass kein kristalliner geordneter synthetischer Graphit entsteht, dessen Herstellung Temperaturen von mindestens 2800°C bei Normaldruck erfordert.

Typische Vorläuferverbindungen sind beispielsweise Kohlenhydrate wie Laktose, Sucrose, Glucose, Polymere wie beispielsweise Polystyrol-Butadien-Block-Copolymere, Polyethylen, Polypropylen, aromatische Verbindungen wie Benzol, Anthracen, Toluol, Perylen sowie alle weiteren dafür dem Fachmann an sich bekannten geeigneten Verbindungen.

Die genaue Temperatur hängt auch vom zu beschichtenden spezifischen gemischten Lithium-Metall-Sauerstoff-Verbindung ab, da sich z.B. Lithium-Übergangsmetallphosphate bei Temperaturen um 800°C oftmals schon zu Phosphiden zersetzen, wohingegen "klassische" Lithium-Metallo-Sauerstoff-Verbindungen oft auch bis zu 2000°C ohne Zersetzung erhitzt werden können.

Bevorzugt besteht die kohlenstoffhaltige Beschichtung nur aus einer Sorte Kohlenstoff.

Erfindungsgemäß werden die Schritte des Mahlens und Sichtens der Lithium-Metall-Sauerstoff-Verbindung in einer einzigen dafür geeigneten Vorrichtung durchgeführt, beispielsweise in einer Wirbelbettkammer, da so Transport-Verluste von einer in eine weitere Vorrichtung entfallen, und das Verfahren zeitoptimiert durchgeführt werden kann.

Die Schritte des Mahlens und Sichtens der Lithium-Metall-Sauerstoff-Verbindung können ebenso in voneinander getrennten für das Verfahren geeigneten Vorrichtungen durchgeführt werden.

In einer bevorzugten Ausführungsform erfolgt das Mahlen in einem Wirbelbett-Verfahren oder einem Fließbett-Verfahren in einer Wirbelbettkammer oder in einer Fließbettkammer, in der unter Verwendung wirbelnder oder fluidisierender Luftströme oder Gasströme, die über Düsen oder mittels Verteilersystem in die Wirbelbettkammer eingebracht werden können, Partikel in Abhängigkeit ihrer Größe und Dichte aufgetrennt werden. Weiter können die Lithium-Metall-Sauerstoff-Verbindungen mittels Rohr-, Rollen- und Gutbett-Walzenmühlen gemahlen werden.

Der Sichtvorgang kann unter Verwendung eines Sichters, erfolgen, ausgestattet mit einer Sichterkammer, einer Sichterdüse, durch die ein Sichterstrom erzeugt wird, sowie eines Sichterrotors. Das erfindungsgemäße Verfahren kann unter Verwendung verschiedener Vorrichtungen durchgeführt werden, beispielhaft seien Windsichter, Zyklon, Zyklonsichter oder Zyklonabscheider genannt.

In einer besonderen Ausführungsform kann das erfindungsgemäße Verfahren einen weiteren Schritt des Mahlens umfassen. Der weitere Schritt des Mahlens dient zur Deagglomeration größerer Partikel, die durch partielles Versintern in Temper oder Kalzinierungsschritten entstanden sind, um kleinpartikuläre Lithium-Metall-Sauerstoff-Verbindungen zu erhalten, die bevorzugt in Lithium-Ionen-Batterien eingesetzt werden. Die Reduktion der Größe der Lithium-Ionen-Batterien ist von großer Bedeutung, daher ist die Bereitstellung von kleinpartikulärem Elektrodenmaterial besonders wichtig. Die Verwendung von kleinpartikulärem Lithium-Elektrodenmaterial ermöglicht so eine höhere Leistungsfähigkeit der Lithium-Ionen-Batterie, bei gleichbleibendem Volumen.

In einer speziellen Ausführungsform erfolgt der weitere Schritt des Mahlens in einer von der Mahlvorrichtung und/oder Sichtvorrichtung getrennten weiteren Vorrichtung. Der weitere Schritt des Mahlens kann unter Verwendung einer Strahlmühle durchgeführt werden, jedoch kann jede andere Mahlvorrichtung, wie beispielsweise Kugelmühle, Rührwerkskugelmühle, Planetenmühle, Zentrifugalmühle, Mörser, Majac Gegenstrahlmühle, Spiralstrahlmühle, Ovalrohr-Strahlmühle, Fließbettgegenstrahlmühle, Strahlmühle mit Prallplatte oder Finnpulva Gegenstrahlmühle eingesetzt werden. Agglomerierte Partikel der Lithium-Metall-Sauerstoff-Verbindung können weiter durch Feinmahlen, Mikronisieren (Feinstmahlen) oder Kryogenvermahlung gemahlen werden.

In einer speziellen Ausführungsform erfolgt der weitere Schritt des Mahlens in einer Vorrichtung, die sowohl mit einer Wirbelbettkammer, einer Sichterkammer als auch optional mit einer Mahlvorrichtung ausgestattet ist. Hierfür kann jede Vorrichtung, in der das erfindungsgemäße Verfahren durchgeführt werden kann, eingesetzt werden. Beispielhaft sei hier die Fließbettgegenstrahlmühle AFG 200 von Hosokawa Alpine AG, Augsburg, Germany genannt.

Erfindungsgemäß kann das Mahlen und Sichten der Lithium-Metall-Sauerstoff-Verbindungen unter zeitgleichem Kühlen, Erwärmen und/oder Trocknen durchgeführt werden.

Die aufgereinigte Lithium-Metall-Sauerstoff-Verbindung weist weniger als 20 ppm an magnetischen und/oder oxidischen Verunreinigungen auf, bevorzugt weniger als 10 ppm weiter bevorzugt weniger als 5 ppm an magnetischen und/oder oxidischen Verunreinigungen bezogen auf das Gesamtgewicht der Lithium-Metall-Sauerstoff-Verbindung. In einer weiteren Ausführungsform weist die erfindungsgemäß erhaltene Lithium-Metall-Sauerstoff-Verbindung magnetische und/oder oxidische Verunreinigungen von weniger als 1 ppm bezogen auf das Gesamtgewicht der Lithium-Metall-Sauerstoff-Verbindung auf.

Die erfindungsgemäß erhaltene aufgereinigte Lithium-Metall-Sauerstoff-Verbindung mit geringem Gehalt an Verunreinigungen lässt sich besonders gut als Aktivmaterial für Elektroden in Lithium-Ionen-Batterien einsetzen, da dadurch hohe Zyklenbeständigkeit erzielt wird, die Leistungsfähigkeit gesteigert und die Lebensdauer der Lithium-Ionen-Batterie verlängert wird.

Nachfolgend ist die vorliegende Erfindung anhand eines Beispiels näher erläutert, ohne dass dieses als einschränkend verstanden werden soll.

### Methodenteil:

Nachfolgend werden die verwendeten Methoden und Geräte näher erläutert.

### Mahlen und Sichten:

Die Schritte des Mahlens und Sichtens einer Lithium-Metall-Sauerstoff-Verbindung wurden in einer Fließbettgegenstrahlmühle AFG 200 der Firma Hosokawa Alpine AG, Augsburg, Germany durchgeführt. Das Gerät wurde entsprechend der Angaben des Herstellers eingesetzt.

### Bestimmung der Verunreinigungen:

Die Bestimmung der Verunreinigungen in Lithium-Metall-Sauerstoff-Verbindung erfolgte mit einem Lichtmikroskop Microscope SZT 300 der Firma VWR, ausgestattet mit einer Lichtquelle KL 2500 LCD der Firma VWR. Das Gerät wurde entsprechend den Angaben des Herstellers eingesetzt.

Die Bestimmung der Verunreinigungen in der Lithium-Metall-Sauerstoff-Verbindung erfolgte mittels Rasterelektronenmikroskopie (REM), unter Verwendung eines Leo 1530 der Firma Zeiss, ausgestattet mit einem Sekundärelektronendetektor der Firma Zeiss, sowie eines EDX-Detektors der Firma Oxford Instruments. Das Gerät wurde entsprechend den Angaben des Herstellers eingesetzt.

Die Bestimmung der Verunreinigungen in der Lithium-Metall-Sauerstoff-Verbindung erfolgte mittels ICP OES, unter Verwendung eines 720 ES ICP Optical Emission Spectrometer der Firma Varian und eines OPTIMA 3300 DV der Firma Perkin Elmer, dabei wurden die Geräte den Angaben des Herstellers entsprechend eingesetzt.

### Ausführungsbeispiel

5000 kg (Menge m) eines Lithiumtitanats Li₄Ti₅O₁₂, erhältlich nach dem Verfahren gemäß der DE 10 2008 026 580.2-41 oder der US 5,545,468, wurden mit vorliegendem, erfindungsgemäßen Verfahren in einer Fließbettgegenstrahlmühle behandelt.

Die Fließbettgegenstrahlmühle war ausgestattet mit verschleißfesten, keramischen Sichträdern, Lufteinspritzdüsen, sowie Auslass-Ventilen. Die Wirbelbettkammer, sowie die Verbindungstücke waren mit verschleißfesten Vulkollan Überzug versehen.

Die Mahlparameter wurden typischerweise wie folgt definiert:

| | |
|---|---|
| Auslass-Ventil (Durchmesser): | 5 mm |
| Druck des Luftstroms: | 6 bar |
| Drehgeschwindigkeit der Sichterräder: | 4600 rpm |
| Füllstand in der Wirbelbettkammer: | 10 bis 15 kg |
| Durchsatz: | ca. 60 kg/h |

500 kg des Lithiumtitanats (10 % der Menge m) wurden in die Mahlkammer der Strahlmühle eingebracht. Der Vorgang des Mahlens und Sichtens wurde gestartet, und der Füllstand des Lithiumtitanats in der Wirbelbettkammer mehrmals überprüft. Der Vorgang des Mahlens und Sichtens wurde erst abgebrochen, als sich der Inhalt der Wirbelbettkammer auf 5 kg (1 % der Menge m) reduziert hatte, durch kontinuierliches Abführen des aufgereinigten Lithiumtitanats, mittels des Auslass-Ventils.

Die Fließbettgegenstrahlmühle wurde geöffnet und die 5 kg (1 % der Menge m) des Rückstandes entnommen und komplett verworfen. Anschliessend wurde neues Lithiumtitanat zugegeben, und der Vorgang für die restliche Menge an 4500 kg Lithiumtitanat wiederholt, unter Verwendung von jeweils etwa 500 kg (10 % der Menge m) Lithiumtitanat Ausgangsmaterial.

Zur Überprüfung des Reinheitsgrades des aufgereinigten Lithiumtitanats auf verbliebene magnetische und/oder oxidische Verunreinigungen, wurden 500 g des aufgereinigten Lithiumtitanats entnommen, und auf Verunreinigungen mit nachstehend beschriebener Methode untersucht.

### Testverfahren:

In einem zylindrischen Plastikgefäß, umfassend 2 1, wurden 500 g des aufgereinigten Lithiumtitanats in 1000 ml destilliertem Wasser suspendiert.

In diese Suspension wurde ein kugelförmiger Magnet (mit einem Durchmesser von 12,7 mm (NdFeB N35, mit einer Oberfläche Ni-Cu-Ni, Magnetische Flussdichte 11700 bis 12100 Gauss) gegeben. Der kugelförmige Magnet wurde von der Suspension abgetrennt, mit destilliertem Wasser gewaschen, sowie im Ultraschallbad unter fließendem Wasser gereinigt. Dabei wurden die am Magnet anhaftenden magnetischen und/oder oxidischen Verunreinigungen an den Magnet-Polen aufkonzentriert. Nach Trocknen bei 90 °C im Ofen, wurden die Pole des Magneten auf einen REM-Probenträger, der mit einer leitenden, klebenden Schicht versehen war, aufgebracht. Die magnetischen Verunreinigungen wurden anschliessend mittels REM unter Verwendung eines BSE-Detektors untersucht. Es gilt zu beachten, dass quantitative Messungen der enthaltenen Elemente mithilfe REM und EDX wenig aussagekräftig sind. Aufgrund von Textureffekten der Oberfläche und entsprechend kleiner Partikelgrößen der vermessenen Teilchen kann der Elektronenstrahl abgelenkt werden, wodurch nur eine semi-quantitative, jedoch qualitativ eindeutige Zuordnung der elektroneninduzierten, abgestrahlten, Element-spezifischen Röntgenstrahlung möglich ist.

Während der Analyse kommt es häufig zur Aufladung der Probe durch den Primärelektronenstrahl. Ist die Energie des Primärelektronenstrahls zu gering, werden nur sehr wenige Sekundärelektronen abgestrahlt, was zur negativen Aufladung der Probe führt. Ist die Energie des Primärelektronenstrahls jedoch zu hoch, wird die Probe positiv aufgeladen, aufgrund einer hohen Anzahl an abgestrahlten Sekundärelektronen. Durch diese Aufladungseffekte entstehen Unterschiede in der Farbgebung der Partikel. Diese können durch eine dünne Schicht aus Kohlenstoff minimiert werden. Diesen Effekt kann man sich zunutze machen, da die teilweise starken Aufladungseffekte während der Analyse der Proben somit eine optische Unterscheidung der Partikel erlauben.
Bei zu niedriger Energie des Primärelektronenstrahls wird die Probe aufgeladen, und ein deutlicher Kontrast in Abhängigkeit der einzelnen Elemente wird sichtbar. So können magnetische und metallische Elemente und Verbindungen, z.B. metallischer Abrieb von Geräten, wie verschiedene Stähle, als helles weiß sichtbar gemacht werden, während oxidische Verbindungen weiterhin als grau zu sehen sind.

Eine weitere Probe des aufgereinigten Lithiumtitanats wurde auf Verunreinigungen mittels ICP OES untersucht. Die aufgeschlossene, gelöste Probe des aufgereinigten Lithiumtitanats wurde durch versprühen als Aerosol im Argonplasma bei 5500 °C bis 8000 °C in seine Atome zerlegt. Durch das Plasma erfolgt eine Anregung der Atome und Ionen zur Lichtemission, die nach spektraler Zerlegung des emittierten Lichts eine qualitative und quantitative Bestimmung der Elemente, anhand ihrer Wellenlängen und Intensitäten ermöglichte.

Die Probe wurde nach er Behandlung gemäß obenstehendem Testverfahren mit einem Lichtmikroskop untersucht. Anhand der anhaftenden magnetischen Partikel an der Magnetkugel sind Rückschlusse auf den Grad der Verunreinigung möglich.

### a) ungereinigtes Lithiumtitanat

### 1. Qualitative Analyse

Normales, ungereinigtes Lithiumtitanat wurde durch ein übliches Herstellungsverfahren erhalten und nach vorstehend beschriebenem Testverfahren behandelt. Die qualitative Analyse mittels Lichtmikroskop des Anteils der magnetischen Partikel die an der Magnetkugel anhaften zeigte, dass die Probe einen relativ hohen Anteil von mehr als 1000 ppm an Verunreinigungen enthielt.

Die Aufnahme der Magnetkugel zeigte, dass relativ viele magnetische Verunreinigungen von mehr als 1000 ppm in der Probe enthalten waren, die als anhaftende magnetische Partikel gut sichtbar sind.

### 2. Quantitative Analyse

### 2.1. REM

Der Anteil der Verunreinigungen ausgehend vom normalen, ungereinigten Lithiumtitanat wurde semi-quantitativ mittels REM bestimmt. Aufgrund der gewählten Kontrast-Einstellungen, konnte so gut zwischen Verunreinigungen und Lithiumtitanat unterschieden werden. Die Aufnahmen bestätigten einen relativ hohen Anteil an Verunreinigungen von mehr als 1000 ppm. Es wurden verschiedene Elemtente nachgewiesen, wie Fe, Cr, Ni und Zn, neben wenig Li und Ti.

### 2.2. ICP OES

Weiter wurde der Anteil der Verunreinigungen auch quantitativ und qualitativ mittels ICP OES bestimmt. Die quantitativen und qualitativen Ergebnisse der ICP OES Analyse zeigten (Tabelle 1), wieviel Verunreinigungen an Fe, Cr, Ni, und Zn in ungereinigtem Lithiumtitanat enthalten waren.

**Tabelle 1: Ergebnisse der ICP OES Analyse von ungereinigtem Lithiumtitanat.**

| Elemente | [ppm] |
|---|---|
| Fe | 13 |
| Cr | 2, 8 |
| Ni | 1,5 |
| Zn | 0,13 |

Die Anteile der verschiedenen Verunreinigungen sind in Tabelle 1 zusammengefasst, und zeigen, dass ungereinigtes Lithiumtitanat vorwiegend Eisen als Verunreinigung enthält.

### b) schlecht aufgereinigtes Lithiumtitanat

### 1. Qualitative Analyse

Schlecht aufgereinigtes Lithiumtitanat wurde gemäß dem erfindungsgemäßen Verfahren aufgereinigt, jedoch ohne den Mahl- und Sichtvorgang vorzeitig abzubrechen. Die weitere Behandlung erfolgte nach dem vorstehend beschriebenen Testverfahren. Die qualitative Analyse mittels Lichtmikroskop zeigte, dass die Probe einen Anteil an magnetischen und/oder oxidischen Partikeln von mehr als 200 ppm enthielt.

Die Aufnahme der Magnetkugel zeigte, einen Anteil von mehr als 200 ppm an Verunreinigungen in der schlecht aufgereinigten Probe.

### 2. Quantitative Analyse

### 2.1. REM

Die Verunreinigungen im schlecht aufgereinigten Lithiumtitanat wurden auch semi-quantitativ mittels REM bestimmt. Aufnahmen mit den gewählten Kontrast-Einstellungen zeigten, dass sehr viele Verunreinigungen neben wenig Lithiumtitanat enthalten waren. Die Aufnahmen bestätigten, dass durch ein vollständiges Mahlen und Sichten der Probe der entsprechend hohe Anteil an Verunreinigungen wie im Ausgangsmaterial enthalten blieb.
Es wurden verschiedene Verunreinigungen wie Fe, Cr, Ni, Zn neben wenig Li und Ti nachgewiesen.

### 2.2. ICP OES

Weiter wurde der Anteil der Verunreinigungen im schlecht aufgereinigten Lithiumtitanat auch quantitativ, mittels ICP OES bestimmt. Die quantitativen und qualitativen Ergebnisse der ICP OES Analyse zeigten, dass in ungereinigtem Lithiumtitanat Verunreinigungen wie Fe, Cr, Ni, und Zn enthalten waren. Tabelle 2 gibt den Anteil der Verunreinigungen im schlecht aufgereinigten Lithiumtitanat an.

**Tabelle 2: Ergebnisse der ICP OES Analyse von schlecht aufgereinigtem Lithiumtitanat.**

| Elemente | [ppm] |
|---|---|
| Fe | 7 |
| Cr | 1,6 |
| Ni | 0,9 |
| Zn | 0,07 |

Die Anteile der verschiedenen Verunreinigungen sind in Tabelle 2 zusammengefasst und zeigen, dass die vorliegenden Werte den Werten des ungereinigten Lithiumtitanats entsprechen, da durch das nicht vorzeitig abgebrochene Mahlen und Sichten die Verunreinigungen weiter im Produkt enthalten bleiben.

### c) gut aufgereinigtes Lithiumtitanat

### 1. Qualitative Analyse

Die Analyse von gut aufgereinigtem Lithiumtitanat, erhalten nach dem erfindungsgemäßen Verfahren, wurde mittels vorstehend beschriebenem Testverfahren behandelt. Die qualitative Analyse mittels Lichtmikroskop zeigte, dass in der Probe nur geringe Spuren von magnetischen und/oder oxidischen Partikeln enthalten waren.

Die Aufnahme der Magnetkugel zeigte, dass Verunreinigungen von weniger als 20 ppm in der Probe enthalten waren, da kaum Partikel an der Magnetkugel anhafteten.

### 2. Quantitative Analyse

### 2.1. REM

Das gut aufgereinigte Lithiumtitanat wurde semi-quantitativ mittels REM bestimmt. Mithilfe der gewählten Kontrast-Einstellungen konnte gezeigt werden, dass nur wenig Verunreinigungen von weniger als 20 ppm in gut aufgereinigtem Lithiumtitanat enthalten war. Die Aufnahmen bestätigten, dass durch das erfindungsgemäße Mahlen und Sichten des Lithiumtitanats, mit vorzeitigem abbrechen des Mahl- und Sichtvorgangs, der Anteil an Verunreinigungen vermindert werden kann.

Es konnten Fe, Cr, Ni und Zn neben viel Li und Ti nachgewiesen werden.

### 2.2. ICP OES

Die quantitativen und qualitativen Ergebnisse der ICP OES Analyse zeigten, dass in gut aufgereinigtem Lithiumtitanat Cr, Ni und Fe als Verunreinigungen noch in folgenden Anteilen enthalten waren (Tabelle 3).

**Tabelle 3: Ergebnisse der ICP OES Analyse von gut aufgereinigtem Lithiumtitanat.**

| Elemente | [ppm] |
|---|---|
| Cr | 0,102 |
| Ni | 0,061 |
| Zn | 0,0028 |
| Fe | 0,557 |

Die Analysen des aufgereinigten Lithiumtitanats zeigen, dass sich durch das erfindungsgemäße Verfahren der Anteil der Verunreinigungen stark vermindert (Tabelle 3). Das aufgereinigte Lithiumtitanat weist eine sehr hohe Reinheit auf, und nur geringe Spuren an Verunreinigungen von Cr, Ni, Zn und Fe.

### d) abgetrennter Rückstand

### 1. Qualitative Analyse

Die Analyse des abgetrennten Rückstands, erhalten nach dem erfindungsgemäßen Verfahren, wurde mittels vorstehend beschriebenem Testverfahren durchgeführt. Die qualitative Analyse mittels Lichtmikroskop zeigte, dass in der Probe vorwiegend magnetische und/oder oxidische Partikeln enthalten waren, die durch das erfindungsgemäße Verfahren abgetrennt wurden.

Die Aufnahme der Magnetkugel zeigte, dass sehr viele magnetische Verunreinigungen in der Probe enthalten waren, von mehr als 10.000 ppm, da ein sehr hoher Anteil an magnetischen Verunreinigungen an der Magnetkugel anhaftet.

### 2. Quantitative Analyse

### 2.1. REM

Die Verunreinigungen des abgetrennten Rückstandes wurden semi-quantitativ mittels REM bestimmt. Die gewählten Kontrast-Einstellungen zeigten, dass die Probe vorwiegend aus Verunreinigungen bestand, von mehr als 10.000 ppm Verunreinigung. Die Aufnahmen bestätigten, dass durch das vorzeitige Abtrennen des Rückstandes hauptsächlich Verunreinigungen abgetrennt werden, mit nur geringen Spuren an Produkt. Es wurden verschiedene Verunreinigungen wie Fe, Cr, Ni und Zn neben geringen Spuren an Li und Ti nachgewiesen.

### 2.2. ICP OES

Die quantitativen und qualitativen Ergebnisse der ICP OES Analyse zeigten, dass in aufgereinigtem Lithiumtitanat Cr, Ni, Zn und Fe Verunreinigungen noch mit folgenden Anteilen enthalten waren (Tabelle 4).

**Tabelle 4: Ergebnisse der ICP OES Analyse des abgetrennten Rückstands.**

| Elemente | [ppm] |
|---|---|
| Fe | 1037 |
| Cr | 210 |
| Ni | 98 |
| Zn | 12 |

Die Analysen des aufgereinigten Lithiumtitanats zeigen, dass sich durch das erfindungsgemäße Reinigungsverfahren der Anteil der Verunreinigungen sehr vermindert (Tabelle 4). Das aufgereinigte Lithiumtitanat wies eine sehr hohe Reinheit auf, und nur geringe Spuren an Verunreinigungen an Cr, Ni und Fe.

## Patentansprüche

1. Verfahren zur Verminderung von magnetischen und/oder oxidischen Verunreinigungen in dotierten und nicht dotierten Lithium-Metall-Sauerstoff-Verbindungen in Partikelform, umfassend die Schritte
a) des Bereitstellens einer Lithium-Metall-Sauerstoff-Verbindung in einer Menge m, enthaltend Verunreinigungen,
b) des Einbringens eines Anteils von 5 bis 15 % der Menge m der Lithium-Metall-Sauerstoff-Verbindung,
c) des Mahlens und Sichtens der Lithium-Metall-Sauerstoff-Verbindung unter kontinuierlichem Entnehmen und Erhalten der aufgereinigten Lithium-Metall-Sauerstoff-Verbindung, bis zu einem Rückstand von 3 % bis 0,01 % der Menge m,
d) des Entnehmens der aufgereinigten Lithium-Metall-Sauerstoff-Verbindung,
e) des Verwerfens des Rückstands,
f) des Wiederholens der Schritte b) bis e) bis die gesamte Menge m umgesetzt wurde.

2. Verfahren nach Anspruch 1, **dadurch gekennzeichnet, dass** die Partikel der Lithium-Metall-Sauerstoff-Verbindung zumindest bereichsweise eine kohlenstoffhaltige Beschichtung aufweisen.

3. Verfahren nach Anspruch 1 oder 2, **dadurch gekennzeichnet, dass** die Lithium-Metall-Sauerstoff-Verbindung dotiert mit B, Al, Mg, Ca, Sr, P, Si, Ti, V, Cr, Mn, Fe, Co, Ni, Zr, Zn, Sn, Nb, Mo, Ru, oder W, oder Mischungen davon vorliegt.

4. Verfahren nach Anspruch 3, wobei die Lithium-Metall-Sauerstoff-Verbindung eine Summenformel mit Liₓ aufweist, mit 0 < x und 0 < y ausgewählt aus LiₓMO₂, LiₓM₂O₄, LiₓM₅O₁₂, LiₓM_{y}O₄, LiₓM₂O₄, LiₓM₂O₃, LiₓM₃O₄, Li₂MO₃, LiₓM₂O₃, LiₓM₃O₄, LiMO₂, LiM'_{0.5}M"_{0.5}O₂, oder wobei die Lithium-Metall-Sauerstoff-Verbindung eine Summenformel mit Li₁₊ₓ aufweist mit 0 < x und 0 < y ausgewählt aus Li₁₊ₓM₂₋ₓO₄, Li₁₊ₓM₂O₄, Li₂MO₃, Li₁₊ₓM'₂₋ₓM"ₓ(PO₄)₃, oder wobei die Lithium-Metall-Sauerstoff-Verbindung eine Summenformel Li₁₋ₓ mit 0 < x und 0 < y ausgewählt aus Li₁₋ₓM'_{y}M"_{2-y}O₄, Li₁₋ₓM'_{1.5}M"_{0.5}O₄, oder Li₁₋ₓM'_{y}M"_{1-y}O₂ aufweist.

5. Verfahren nach einem der vorhergehenden Ansprüche 1 bis 4, wobei das Einbringen der Lithium-Metall-Sauerstoff-Verbindung nach Einbringen eines Anteils von 5 bis 15 %, der Menge m abgebrochen wird.

6. Verfahren nach Anspruch 5, wobei die aufgereinigte Lithium-Metall-Sauerstoff-Verbindung während des Mahlens und Sichtens kontinuierlich entnommen und erhalten wird.

7. Verfahren nach Anspruch 6, wobei die Lithium-Metall-Sauerstoff-Verbindung solange einem Mahlvorgang und Sichtvorgang unterworfen wird, bis der Rückstand auf einen Anteil von 3 % bis 0,01 % der Menge m vermindert worden ist.

8. Verfahren nach Anspruch 7, wobei der Mahlvorgang und der Sichtvorgang abgebrochen werden, bevor der Rückstand 3 % bis 0,01 % der Menge m unterschritten hat.

9. Verfahren nach Anspruch 8, wobei der Rückstand von 3 % bis 0,01 % der Menge m, 2 % bis 0,5 % der Menge m entnommen und verworfen wird.

10. Verfahren nach Anspruch 9, wobei das Mahlen und Sichten der Lithium-Metall-Sauerstoff-Verbindung in einer einzigen Vorrichtung durchgeführt wird.

11. Verfahren nach Anspruch 10, wobei das Mahlen und Sichten der Lithium-Metall-Sauerstoff-Verbindung in getrennten Vorrichtungen durchgeführt wird.

12. Verfahren nach einem der vorstehenden Ansprüche 1 bis 11, wobei das Verfahren gemäß der Schritte a) bis e) noch einen weiteren Schritt des Mahlens umfasst.

13. Verfahren nach Anspruch 12, wobei der weitere Schritt des Mahlens in einer von der Mahl- und/oder Sichtvorrichtung getrennten weiteren Vorrichtung erfolgt.

14. Verfahren nach Anspruch 13, wobei das Mahlen und/oder Sichten und der weitere Schritt des Mahlens in einer einzigen Vorrichtung erfolgt.

15. Lithium-Metall-Sauerstoff-Verbindung, erhältlich durch ein Verfahren nach einem der Ansprüche 1 bis 14, wobei es sich bei der Lithium-Metall-Sauerstoff-Verbindung um ein dotiertes oder nicht dotiertes Lithiumtitanat oder eine dotierte oder nicht dotierte Verbindung der generischen Formel LiMZO₄, wobei Z aus P, V, Pb, Mo und Nb ausgewählt ist und M für ein Metall steht, das aus Co, Ni, Mn, Fe und Cr ausgewählt ist, handelt, enthaltend magnetische und/oder oxidische Verunreinigungen von weniger als 20 ppm bezogen auf das Gesamtgewicht der Lithium-Metall-Sauerstoff-Verbindung.

## Claims

1. Method for reducing magnetic and/or oxide impurities in doped and undoped lithium-metal-oxygen compounds in particulate form, comprising the steps
a) providing a lithium-metal-oxygen compound in a quantity m, containing impurities,
b) introducing a fraction of 5 to 15% of the quantity m of the lithium-metal-oxygen compound,
c) grinding and classifying the lithium-metal-oxygen compound while continuously withdrawing and obtaining the purified lithium-metal-oxygen compound, down to a residue of 3% to 0.01% of the quantity m,
d) withdrawing the purified lithium-metal-oxygen compound,
e) discarding the residue,
f) repeating steps b) to e) until the entire quantity m has been transformed.

2. Method according to claim 1, **characterised in that** the lithium-metal-oxygen compound particles have a carbon-containing coating at least in places.

3. Method according to claim 1 or 2, **characterised in that** the lithium-metal-oxygen compound assumes a form doped with B, Al, Mg, Ca, Sr, P, Si, Ti, V, Cr, Mn, Fe, Co, Ni, Zr, Zn, Sn, Nb, Mo, Ru, or W, or mixtures thereof.

4. Method according to claim 3, wherein the lithium-metal-oxygen compound has an empirical formula with Liₓ, where 0 < x and 0 < y, selected from LiₓMO₂, LiₓM₂O₄, LiₓM₅O₁₂ LiₓM_{y}O₄, LiₓM₂O₄ LiₓM₂O_{3,} LiₓM₃O_{4,} Li₂MO₃, LiₓM₂O₃, LiₓM₃O₄, LiMO₂, LiM'_{0.5}M"_{0.5}O₂, or wherein the lithium-metal-oxygen compound has an empirical formula with Li₁₊ₓ, where 0 < x and 0 < y, selected from Li₁₊M₂₋ₓO₄, Li₁₊ₓM₂O₄, Li₂MO₃, Li₁₊ₓM'₂₋ₓM"ₓ(PO₄)₃, or wherein the lithium-metal-oxygen compound has an empirical formula with Li₁₋ₓ, where 0 < x and 0 < y, selected from Li₁₋ₓM'_{y}M"_{2-y}O₄, Li₁₋ₓM'_{1.5}M"_{0.5}O₄, or Li₁₋ₓM'_{y}M"_{1-y}O₂.

5. Method according to one of preceding claims 1 to 4, wherein introduction of the lithium-metal-oxygen compound is stopped once a fraction of 5 to 15% of the quantity m has been introduced.

6. Method according to claim 5, wherein the purified lithium-metal-oxygen compound is continuously withdrawn and obtained during grinding and classification.

7. Method according to claim 6, wherein the lithium-metal-oxygen compound is subjected to a grinding process and classification process until the residue has been reduced to a fraction of 3% to 0.01% of the quantity m.

8. Method according to claim 7, wherein the grinding process and the classification process are stopped before the residue has dropped to below 3% to 0.01 % of the quantity m.

9. Method according to claim 8, wherein the residue of 3% to 0.01% of the quantity m, 2% to 0.5% of the quantity m, is withdrawn and discarded.

10. Method according to claim 9, wherein grinding and classification of the lithium-metal-oxygen compound are carried out in a single apparatus.

11. Method according to claim 10, wherein grinding and classification of the lithium-metal-oxygen compound are carried out in separate apparatuses.

12. Method according to one of preceding claims 1 to 11, wherein the method according to steps a) to e) comprises a further grinding step.

13. Method according to claim 12, wherein the further grinding step proceeds in an apparatus separate from the grinding and/or classifying apparatus.

14. Method according to claim 13, wherein grinding and/or classification and the further grinding step proceed in a single apparatus.

15. Lithium-metal-oxygen compound obtainable by a method according to one of claims 1 to 14, wherein the lithium-metal-oxygen compound is a doped or undoped lithium titanate or a doped or undoped compound of the generic formula LiMZO₄, wherein Z is selected from P, V, Pb, Mo and Nb and M denotes a metal which is selected from Co, Ni, Mn, Fe and Cr, containing less than 20 ppm of magnetic and/or oxide impurities based on the total weight of the lithium-metal-oxygen compound.

## Revendications

1. Procédé destiné à la réduction d'impuretés magnétiques et/ou oxydiques dans des composés dopés et non dopés de lithium-métal-oxygène sous la forme de particules, comprenant les étapes dans lesquelles :
a) on procure un composé de lithium-métal-oxygène en une quantité m, qui contient des impuretés ;
b) on introduit une fraction de 5 à 15 % de la quantité m du composé de lithium-métal-oxygène ;
c) on broie et on tamise le composé de lithium-métal-oxygène dans des conditions d'extraction et de maintien en continu du composé purifié de lithium-métal-oxygène jusqu'à obtenir un résidu de 3 % à 0,01 % de la quantité m ;
d) on extrait le composé purifié de lithium-métal-oxygène ;
e) on se débarrasse du résidu ;
f) on répète les étapes b) à e) jusqu'à obtenir la transformation de la quantité m complète.

2. Procédé selon la revendication 1, **caractérisé en ce que** les particules du composé de lithium-métal-oxygène présentent, au moins par zones, un revêtement contenant du carbone.

3. Procédé selon la revendication 1 ou 2, **caractérisé en ce que** le composé de lithium-métal-oxygène est présent en étant dopé avec B, Al, Mg, Ca, Sr, P, Si, Ti, V, Cr, Mn, Fe, Co, Ni, Zr, Zn, Sn, Nb, Mo, Ru ou W, ou avec des mélanges de ces derniers.

4. Procédé selon la revendication 3, dans lequel le composé de lithium-métal-oxygène présente une formule brute avec Liₓ dans laquelle 0 < x et 0 < y, choisie parmi LiₓMO₂, LiₓM₂O₄, LiₓM₅O₁₂, LiₓM_{y}O₄, LiₓM₂O₄, LiₓM₂O₃, LiₓM₃O₄, Li₂MO₃, LiₓM₂O₃, LiₓM₃O₄, LiMO₂, LiM'_{0,5}M"_{0,5}O₂, ou dans lequel le composé de lithium-métal-oxygène présente une formule brute avec Li₁₊ₓ dans laquelle 0 < x et 0 < y, choisie parmi Li₁₊ₓM₂₋ₓO₄, Li₁₊ₓM₂O₄, Li₂MO₃, Li₁₊ₓM'₂₋ₓM"ₓ(PO₄)₃, ou dans lequel le composé de lithium-métal-oxygène présente une formule brute avec Li₁₋ₓ dans laquelle 0 < x et 0 < y, choisie parmi Li₁₋ₓM'_{y}M"_{2-y}O₄, Li₁₋ₓM'_{1,5}M"_{0,5}O₄, ou Li₁₋ₓM'_{y}M"_{1-y}O₂.

5. Procédé selon l'une quelconque des revendications précédentes 1 à 4, dans lequel l'introduction du composé de lithium-métal-oxygène est interrompue après l'introduction d'une fraction de 5 à 15 % de la quantité m.

6. Procédé selon la revendication 5, dans lequel le composé purifié de lithium-métal-oxygène est prélevé et maintenu en continu au cours du broyage et du tamisage.

7. Procédé selon la revendication 6, dans lequel le composé de lithium-métal-oxygène est soumis à un processus de broyage et à un processus de tamisage jusqu'à ce que l'on obtienne une réduction du résidu à hauteur d'une fraction de 3 % à 0,01 % de la quantité m.

8. Procédé selon la revendication 7, dans lequel on interrompt le processus de broyage et le processus de tamisage avant que le résidu ne dépasse vers le bas de 3 % à 0,01 % de la quantité m.

9. Procédé selon la revendication 8, dans lequel on prélève le résidu de 3 % à 0,01 % de la quantité m, de 2 % à 0,5 % de la quantité m et on s'en débarrasse.

10. Procédé selon la revendication 9, dans lequel on met en œuvre le broyage et le tamisage du composé de lithium-métal-oxygène dans un dispositif unique.

11. Procédé selon la revendication 10, dans lequel on met en œuvre le broyage et le tamisage du composé de lithium-métal-oxygène dans des dispositifs séparés.

12. Procédé selon l'une quelconque des revendications précédentes 1 à 11, dans lequel le procédé selon les étapes a) à e) comprend encore une étape supplémentaire de broyage.

13. Procédé selon la revendication 12, dans lequel l'étape supplémentaire de broyage a lieu dans un autre dispositif séparé du dispositif de broyage et/ou de tamisage.

14. Procédé selon la revendication 13, dans lequel le broyage et/ou le tamisage, ainsi que l'étape supplémentaire de broyage ont lieu dans un dispositif unique.

15. Composé de lithium-métal-oxygène que l'on obtient par l'intermédiaire d'un procédé selon l'une quelconque des revendications 1 à 14, dans lequel, en ce qui concerne le composé de lithium-métal-oxygène, il s'agit d'un titanate de lithium dopé ou non dopé ou d'un composé dopé ou non dopé répondant à la formule générique LiMZO₄ dans laquelle Z est choisi parmi P, V, Pb, Mo et Nb et M représente un métal qui est choisi parmi Co, Ni, Mn, Fe et Cr, contenant des impuretés magnétiques et/ou oxydiques à raison de moins de 20 ppm, rapportées au poids total du composé de lithium-métal-oxygène.
